Europäisches Patentamt

European Patent Office

Office européen des brevets

(11) Publication number: **0 107 100**
**B1**

(12) **EUROPEAN PATENT SPECIFICATION**

(45) Date of publication of patent specification: **25.03.87**

(21) Application number: **83109757.1**

(22) Date of filing: **29.09.83**

(51) Int. Cl.⁴: **B 65 G 27/20, B 06 B 1/16**

(54) Vibratory machinery.

(30) Priority: **07.10.82 GB 8228664**

(43) Date of publication of application:
**02.05.84 Bulletin 84/18**

(45) Publication of the grant of the patent:
**25.03.87 Bulletin 87/13**

(84) Designated Contracting States:
**AT BE CH DE FR IT LI LU NL SE**

(56) References cited:
**BE-A- 461 416**
**DE-B-1 096 096**
**FR-A-1 300 354**
**US-A-2 097 347**
**US-A-2 841 995**

(73) Proprietor: **ACME CONVEYORS LIMITED**
**6 Hillwood Road Four Oaks**
**Sutton Coldfield B75 5QL (GB)**

(72) Inventor: **Little, Sidney Devereux**
**50 Enderley Drive**
**Bloxwich West Midlands (GB)**

(74) Representative: **Leach, John Nigel et al**
**FORRESTER & BOEHMERT**
**Widenmayerstrasse 4/I**
**D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 107 100 B1

## Description

This invention relates to a linear vibrator according to the preamble of claim 1 (known from US—A—2097347). . There are many uses for vibratory machines, one being to convey articles. An article placed at one location on a platform of a vibratory conveyor, is caused to move by the vibrations to a second location. Another use is for classifying/grading articles such as vegetables and fruit which are caused to move across an apertured platen, the apertures being of increasing size across the platen. More particularly, the invention relates to a machinery which is vibrated by a linear vibrator so that vibrating movement takes place along a linear vibrating axis.

It has been common practice to provide a vibrator which is secured to the machinery and is actuated as a shaft thereof is rotated. A transmission such as a V-belt has been provided to transmit power from a power means such as an electric motor, to the shaft. The power means has been mounted on a base structure or elsewhere remote from the vibrator. It has been essential in, for example, applications such as freezing vegetables, where the vegetables have to be frozen within a very short time of harvesting to provide a separate motor which can easily be replaced should the windings become worn or the motor otherwise malfunction. Any delay in conveying the vegetables could result in damage to the vegetables. Such a vibrator is disclosed in U.S. Specification 2,097,347.

However, this arrangement also has many disadvantages.

A primary disadvantage is that the transmission and separate power means require much space, which space may not be readily available in some applications.

Another disadvantage in achieving a satisfactory transmission because of the relative movement between the power means and the vibrator as the machinery vibrates.

Another disadvantage is that the transmission or the entire machinery needs to be well guarded so that an operator does not become trapped by a moving part of the transmission.

One obvious solution to these problems is to mount the power means more closely adjacent to the vibrator, but because the motor and vibrator are still separate parts, it is necessary to provide a transmission and thus the transmission or the entire machinery, still requires guarding.

Specification U.S. 2841995 shows such a radial vibrator arrangement in which the motor is mounted in line with the, single, shaft of the vibrator, but the arrangement suffers from problems with the bearings.

Specifications FR 1300354 and DE 1096096 also show "in-line" arrangements for radial vibrators, but in both cases, the motor and vibrator shafts are integral so that the motor and vibrator are inseparable.

According to one aspect of the invention, we provide a linear vibrator comprising a casing a first shaft mounted in the casing and rotatable in a first direction about a first rotational axis and the first shaft carrying a first mass for rotation about said first axis, a second shaft mounted in the casing driven from the first shaft and rotatable about a second rotational axis parallel to the first rotational axis, in a second direction opposite to the first direction, the second shaft carrying a second mass for rotation about the second axis, the first and second masses being of generally equal magnitude and being rotated in opposite directions but at the same speed, characterised in that the first shaft extends from said casing and is separably connected in line with an output shaft of a motive unit, the motive unit being separably secured to the vibrator.

Thus the necessity to provide separate linear vibrator and power means and a transmission between them, which requires guarding, is entirely eliminated.

It has been found surprisingly that as well as a notable increase in reliability by providing such a direct linear vibrator arrangement, there is a considerable increase in efficiency which enables a much smaller vibrator to be used in a given application.

The motive unit may be readily separated from the vibrator so that the motive unit alone can be replaced in the event of a breakdown, but where there is insufficient time or space available in a given application, if desired the entire vibrator and motive unit assembly may be replaced. To assist this, preferably the motive unit and/or vibrator is/are readily removable from the machinery, e.g. bolted thereto or otherwise secured in a manner to permit of easy removal.

Preferably the motive unit has an outer casing secured directly to the casing of the vibrator by means which permit the motive unit to be readily separated from the vibrator.

Preferably the output shaft of the motive unit first shaft, and the first shaft of the vibrator are rigidly connected together in any suitable manner such as for example by a key positioned in aligned slots, one slot being in said first shaft and one slot being in said output shaft.

Conveniently, the driving connection between said output shaft of the motive unit and the first shaft, and any connection provided between any casing surrounding the motive unit and any casing of the vibrator surrounding said first and second shaft, may be such that separation of said motive unit from said first and second shafts can be achieved without difficulty.

The motive unit may comprise an electric motor and the windings of the motor may surround or partially surround a rotor which comprises said output shaft, the windings being wholly within the casing of the motive unit where this is provided.

The first and second shafts of the vibrator may each have meshing spur gears whereby the second shaft is driven from the motive unit through the first shaft.

Preferably the spur gears have the same number of teeth to enable the masses to be rotated in opposite directions but at the same speed.

The first and second rotating masses may comprise lobes of metal secured to their respective shafts.

Preferably, the first and second masses are equal and are angularly disposed on their respective shafts so that twice in each rotation of the shafts the centre of gravity of each mass simultaneously lies in a plane containing the axis of rotation of the shafts. More preferably the centres of gravity of the masses are alternately at positions close together and then furthest apart when in said plane. Thus when said masses are in said close together positions, the masses are moving in the same first directions, i.e. parallel to tangents to the circumferences of rotation of the centres of gravity, and when said masses are in said furthest apart positions the masses are moving in the same second direction opposite to the first direction, and when in an intermediate position half way between said close together and furthest apart positions, the masses are moving in relatively opposite directions and thus balance the effect of one another out. Regular, linear pulsed vibrations are thus provided by the vibrator along a vibrating axis parallel to the first and second directions, and perpendicular to said plane.

According to a second aspect of the invention, we provide vibratory machinery comprising a base on which a vibratory part is mounted through a resilient mounting means, a linear vibrator according to the first aspect of the connection mounted on the vibratory part to cause vibration thereof.

To increase the strength of the vibrations of the vibratory machinery, the output shaft of the motive unit may at its end remote from the vibrator, be coupled in line to a first shaft of a further vibrator substantially identical to the vibrator hereinbefore described, i.e. having first and second masses rotatable in opposite directions about respective first and second shafts.

Thus the motive unit may provide power to both the vibrators.

The resilient mountings on the vibratory machinery may comprise a plurality of linkages each pivotally connected to the base and to the vibrating part with a spring means between the base and the linkage, although any other type of resilient mounting means could alternatively be provided which permits linear vibration of the vibratory part relative to the base.

The vibratory machinery may comprise a conveyor for conveying an article or articles and may be mounted so that the vibratory axis extends in the direction of desired travel of the article or articles. Of course, the vibratory machinery may comprise any other type of machinery which has a part which is required to vibrate linearly with the vibrating axis aligned with the desired direction of vibration.

The invention will now be described with reference to the accompanying drawings, in which:—

FIGURE 1 is a sectional view through a vibrator according to the second aspect of the invention for use in vibratory machinery according to the first aspect of the invention;

FIGURE 2 is a schematic view of part of a conveyor with the vibrator of Figure 1 attached.

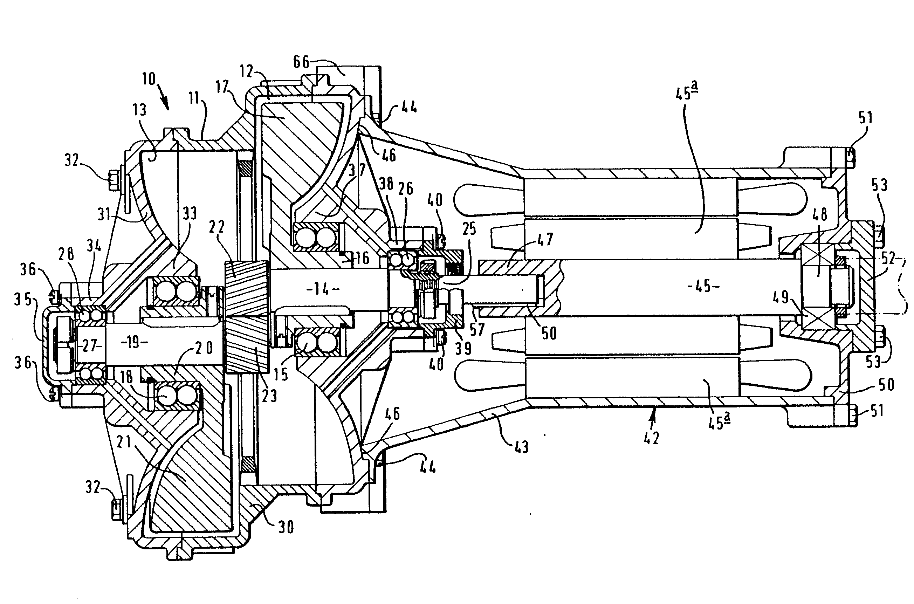

Referring to Figure 1, there is shown a linear vibrator 10 comprising a vibrator casing 11 which provides first and second chambers 12, 13 which each have an annular space in which a mass is rotated, as hereinbefore described. Within the first chamber 12, a first shaft 14 is mounted for rotation in bearings 15, the first shaft 14 having keyed thereto a bush 16 which is integral with a first mass 17 comprising a lobe of metal extending outwardly of the bush 16. As the shaft 14 is rotated, the mass 17 is rotated in the annular space of the chamber 12 with the shaft causing a vibration.

Within the second chamber 13 there is mounted for rotation in bearings 18 a second shaft 19 having keyed thereto a bush 20 which is integral with a second mass 21 comprising a lobe of metal extending outwardly of the bush 20, so that as the shaft 19 rotates, the second mass 21 is caused to rotate in the annular space of the chamber 13 with the shaft 19, also causing a vibration.

The first shaft 14 has mounted on the end thereof adjacent the second chamber 13 a spur gear 22, and similarly the second shaft 19 has mounted on the end thereof adjacent the first chamber 12, a further spur gear 23, the gears 22, 23 meshing.

As the shaft 14 rotates, for example in a clockwise direction, the second shaft 19 is thus caused to rotate in an anti-clockwise direction.

The gears 22, 23 are of the same size and have the same number of teeth and this enables the shafts 14, 19 to rotate at the same rotational speed, although oppositely.

The axes of the shafts 14 are parallel and the masses 17, 21 are angularly arranged on their respective shafts 14, 19 so that twice in each rotation of the shafts 14, 19 the masses are simultaneously in positions where the centre of gravity of each mass lies in a plane containing the axes of rotation of the shafts 14, 19.

The centres of gravity of the masses 17, 21 are alternately in positions where they are close together and moving in the same first direction, and positions where they are furthest apart and again moving in the same second ·direction opposite to the first direction, the first and second directions being parallel to tangents to the circumferences of rotation of the centres of gravity.

Thus the masses rotate "in phase".

At intermediate positions halfway between the furthest apart and closest together positions, the masses are moving in relatively opposite directions and thus balance one another out. Thus the vibrator 10 as the masses 17, 21 move in the first or second directions is urged linearly along a vibratory axis which is parallel to the first and second directions.

As seen in Figure 1, one of the masses, i.e. mass 21 is in the lower part of its respective chamber 13, whilst the other mass 17 is in the upper part of its respective chamber 12.

As each of the masses 17, 21 are rotating oppositely, but moving in the same first direction, the vibrator 10 will tend to be urged along the vibratory axis in the first direction which is normal to the plane of the paper. When both the masses 17, 21 rotate through 90°, they will cancel one another out because they will be moving in relatively opposite directions. When the masses 17, 21 rotate through a further 90° they will assume opposite positions to those shown, that is with the masses 21 in the upper part of its respective chamber 13 and the mass 17 in the lower part of its respective chamber 12. Hence the vibrator 10 will be urged in a second direction opposite to the first direction along the vibratory axis.

It can be seen that the first shaft 14 extends outwardly of chamber 12 and hence casing 11 away from chamber 13, and the extending end, designated 25, is received in further bearings 26. Similarly, the second shaft 19 extends outwardly of chamber 13 away from chamber 12 and the extended end 27 is received in further bearings 28.

The casing 11 is made in two parts, a first part 30 which provides the whole of chamber 12 and approximately one half of chamber 13, and a second part 31 secured to part 30 by bolts 32, which provides the remainder of chamber 13, including a mounting 33 for bearings 18 and mounting 34 for bearings 28.

An end cap 35 is also provided to cover the extending end of shaft 19 and to permit ready replacement of the bearings 28, the cap 35 being secured to casing part 31 by bolts 36.

The first casing part 30 provides a mounting 37 for bearings 15 and a mounting 38 for bearings 26, and a further cap 39, secured to the casing part 30 by bolts 40, surrounds the extending end 25 of the shaft 14 and allows for ready removal of the bearings 26.

It will be appreciated that the vibrator provides a simple construction which is easily maintainable.

Because the masses 17, 21 are balanced as described above, wear on the respective bearings 15, 18, 26, 28 is low but when it is necessary to replace the bearings, after prolonged use, the end bearings 26, 28 can easily be replaced by removing caps 39 or 35 respectively, whilst the main bearings 15, 18 are accessible by separating the two casing parts 30, 31.

Previously, to power a vibrator, it has been usual practice to rotate the first shaft 14 by securing a pulley or the like to the part of the extended end 25 of the shaft 14 which extends from the cap 39. This has inherent disadvantages as described above.

In the vibrator 10 described, all these disadvantages are overcome because a motive unit 42 is directly secured to the vibrator 10. The unit 42 comprises a casing 43 which is bolted to the casing 11 of the vibrator by bolts 44, the end edge 46 of the casing being of corresponding configuration to an abutting part of casing part 30. The end of casing 43 which engages casing 11 is open and the mounting 38 for bearings 26 and the end cap 39 of the vibrator 10, are received in the open end of the motive unit 42.

The motive unit 42 comprises an electric motor having a rotor 45 which is caused to rotate when windings 45a which surround the rotor 45 are energised. The rotor 45 is, in the example shown, a coaxial rigid extension of the first shaft 14 of the vibrator 10 and is connected thereto by the extending end 25 of the shaft 14 being received in a bore 50 in rotor 45, and being held therein by a woodruff key 51, the bore 50 and end 25 each having a slot to receive the key 57. Of course, if required the rotor 45 could be otherwise arranged to rotate the shaft 14. For example, the shaft 14 may be geared to rotor 45, or the rotor 45 and shaft 14 may comprise an integral assembly of component parts.

Referring again to Figure 1, it can be seen that the left end 47 of the rotor 45 is supported by the shaft 14. The right end 48 of the rotor 45 is mounted in bearings 49 for rotation, which bearings are supported in a bush 50 which is secured by bolts 51 to the right end of casing 43. A cap 52 is secured to bush 50 by bolts 53 and provide ready access to bearings 49.

The motive unit is itself a simple construction and is easily maintained. If it is necessary to rewind the windings 45a of the unit, the bush 50 is removed and thus the windings 45a can be removed from the casing 43. The entire unit 42 may be removed from the vibrator 10 if required, by merely unfastening the bolts 44 and pulling the casing 43 sideways.

If desired, the motive unit may power a further vibrator, the shaft 45 not terminating within a cap 52 as shown, but extending therefrom as indicated in dotted lines, the cap 52 being omitted and the shaft 45 being secured, for example by a similar connection to that between the shafts 45 and 25, to a further shaft similar to shaft 25 comprising a first shaft of a vibrator substantially identical to vibrator 10. The casing 42 of the motive unit may in this event need to be modified at its right hand end to facilitate connection to a casing of the further vibrator.

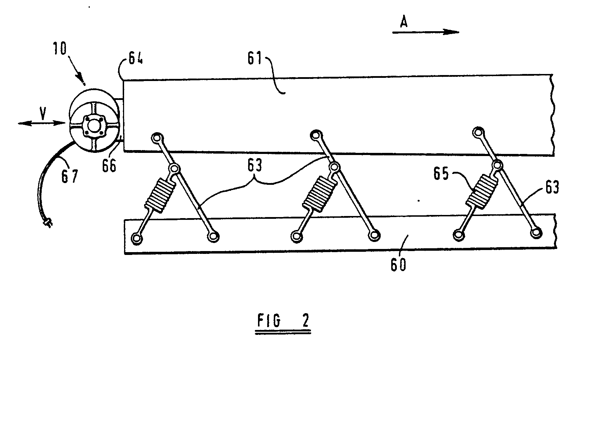

Referring now to Figure 2, there is shown one example of vibratory machinery with which the vibrator 10 and motive unit 42 of Figure 1 can be used.

The machinery comprises a conveyor having a base 60 and a conveyor platform 61 comprising a channel-shaped part. The platform 61 is connected to the base 60 by a plurality of links 63 which are pivoted at either end to the platform and base respectively. The channel platform may be slightly inclined to the horizontal if required to facilitate an article placed on the platform adjacent end 64 being caused to be conveyed to the right in the direction of arrow A.

The links 63 are connected adjacent their pivoted ends to one end of a spring means 65, the other end of which is anchored to the base 60. On the end 64 of the conveyor there is mounted a vibrator 10 as hereinbefore described, the casing 11 of the vibrator 10 being provided with brackets 66 to facilitate mounting. In the example shown, the vibratory part 61 of the vibratory machinery is intended to vibrate in a cyclic path in response to the linear vibrations of the vibrator 10 so that an article placed on the platform 61 is conveyed in the direction of arrow A. Accordingly the resilient mountings are arranged so that a horizontal vibration of vibrator 10 causes the required response in the conveyor platform 61. Thus the vibrator 10 is mounted so that the vibratory axis V thereof is horizontal. Of course any other type of resilient mounting means may be provided, which allow for cyclic vibration of a part such as platform 61.

In another vibratory machine, it may be desirable for the vibrator 10 to vibrate along a vertical or other vibratory axis in which case the vibratory 10 will need to be mounted in the appropriate orientation.

It is preferred that the centre of gravity of the masses 17, 21 lie in a plane, or closely adjacent to a plane containing the upper surface of the conveyor platform.

It can be seen that the only connection which has to be made to the vibrator 10 is for an electrical lead 67 to be connected to the mains. Thus the need to provide a transmission between a separate motor and a vibrator is eliminated and guarding of the transmission is not required and the motive unit 42 vibrates with the vibrator 10 to provide a linear, balanced vibrator.

Further, where previously the motor has been mounted on a framework which extends from the base above the conveyor platform, which has restricted the uses to which the conveyor can be put due to the increased height. In the present example, the maximum height is that of the platform 61 and thus the conveyor is far more versatile than known conveyors.

If the vibrator 10 or motive unit 42 malfunction, a repair can be carried out in situ as hereinbefore described, or the motive unit 42 can be replaced. Further alternatively, if desired by undoing the brackets 66, the entire vibrator 10 and motive unit 42 can be replaced.

The invention is applicable to other types of vibratory machinery having a part which it is desired to vibrate and the scope of the invention as claimed is not restricted to conveyors as hereinbefore described.

The features disclosed in the foregoing description, in the following claims and/or in the accompanying drawings may both, separately and in any combination thereof, be material for realising the invention in diverse forms within the scope of the claims.

## Claims

1. A linear vibrator (10) comprising a casing (11), a first shaft (14) mounted in the casing (11) and rotatable in a first direction about a first rotational axis and the first shaft (14), carrying a first mass (17) for rotation about said first axis, a second shaft (19) mounted in the casing (11) driven from the first shaft (14) and rotatable about a second rotational axis parallel to the first rotational axis, in a second direction opposite to the first direction, the second shaft (19) carrying a second mass (21) for rotation about the second axis, the first and second masses (17, 21) being of generally equal magnitude and being rotated in opposite directions but at the same speed, characterised in that the first shaft (14) extends from said casing (11) and is separably connected in line with an output shaft (45) of a motive unit (42) the motive unit being separably secured to the vibrator (10).

2. A vibrator according to Claim 1 characterised in that the motive unit (42) has an outer casing (43) secured directly to the casing (11) of the vibrator (10) by means which permit the motive unit (42) to be readily separated from the vibrator (10).

3. A vibrator according to Claim 2 characterised in that either or both the motive unit casing (43) or the casing (11) of the vibrator (10) has mounting means to enable the vibrator (10) and motive unit (42) to be secured together to vibratory machinery.

4. A vibrator according to any one of the preceding claims characterised in that the output shaft (45) of the motive unit (42) and the first shaft (14) of the vibratory (10) are rigidly connected together by a key (57) positioned in aligned slots (50), one slot being in the first shaft (14) and one slot being in the output shaft (45).

5. A vibrator according to any one of the preceding claims characterised in that the motive unit (42) comprises an electric motor, the windings (45a) of the motor surrounding or partially surrounding a rotor (45) which comprises the output shaft, the windings being wholly within the casing (43) (where provided) of the motive unit (42).

6. A vibrator according to any one of the preceding claims characterised in that the first (14) and second (19) shafts of the vibrator (10) each have meshing spur gears (22, 23) whereby the second shaft (19) is driven from the motive unit (42) through the first shaft (14), the spur gears (22, 23) having the same number of teeth.

7. A vibrator according to any one of the preceding claims characterised in that the first and second masses (17, 21) are equal and are angularly disposed on their respective shafts (14, 19) so that twice in each rotation of the shafts (14, 19) the centre of gravity of each mass simultaneously lies in a plane containing the axis of rotation of the shafts (14, 19), and when in said plane the centres of gravity of the masses (17, 21) are alternately at positions close together and then furthest apart.

8. Vibratory machinery comprising a base (60) on which a vibratory part (61) is mounted through a resilient mounting means (63, 65), a linear vibrator (10) according to any one of claims 1 to 7 mounted on the vibratory part (61) to cause vibration thereof.

9. Vibratory machinery according to claim 8 characterised in that the resilient mountings on the vibratory machinery comprise a plurality of linkages (63) each pivotally connected to the base (60) and to the vibrating part (61) with a spring means (65) between the base (60) and the linkage (63).

**Patentansprüche**

1. Linearschwingungserzeuger (10) aufweisend ein Gehäuse (11), eine erste Welle (14), angebracht in dem Gehäuse (11) und drehbar in einer ersten Richtung um eine erste Drehachse, und wobei die erste Welle (14) eine Masse (17) trägt, für eine Drehung um die erste Achse, weiter aufweisend eine zweite Welle (19), angebracht in dem Gehäuse (11) und angetrieben von der ersten Welle (14) und drehbar um eine zweite Drehachse, parallel zu der ersten Drehachse, in einer zweiten Richtung entgegengesetzt zu der ersten Richtung, wobei die zweite Welles (19) eine zweite Masse (21) für eine Drehung um die zweite Achse trägt, und wobei die ersten und die zweiten Massen (17, 21) von im wesentlichen gleicher Größe sind und in entgegenesetzte Richtungen, jedoch mit gleicher Geschwindigkeit, gedreht werden, dadurch gekennzeichnet, daß die erste Welle (14) sich von dem Gehäuse (11) aus erstreckt und gesondert in Reihe mit einer Ausgangswelle (45) einer beweglichen Einheit (42) verbunden ist, wobei die bewegliche Einheit gesondert an dem Schwingungserzeuger (10) gesichert ist.

2. Schwingungserzeuger nach Anspruch 1, dadurch gekennzeichnet, daß die bewegliche Einheit (42) ein äußeres Gehäuse (43) besitzt, gesichert unmittelbar an dem Gehäuse (11) des Schwingungserzeugers (10), durch Elemente, welche es ermöglichen, daß die bewegliche Einheit (42) leicht von dem Schwingungserzeuger (10) getrennt wird.

3. Schwingungserzeuger nach Anspruch 2, dadurch gekennzeichnet, daß von dem Gehäuse (43) der beweglichen Einheit oder dem Gehäuse (11) des Schwingungserzeugers (10) jedes oder beide Befestigungselemente aufweist, um es zu ermöglichen, daß der Schwingungserzeuger (10) un die bewegliche Einheit (42) zusammen an einer Schwingungserzeugungsmaschine gesichert werden.

4. Schwingungserzeuger nach einem der vorstehenden Ansprüche, dadurch gekennzeichnet, daß die Ausgangswelle (45) der beweglichen Einheit (42) un die erste Welle (14) des Schwingungserzeugers (10) starr miteinander verbunden sind durch eine Passfeder (57), positioniert in ausgerichteten Schlitzen (50), wobei ein Schlitz sich in der ersten Welle (14) und der andere Schlitz in der Ausgangswelle (45) befindet.

5. Schwingungserzeuger nach einem der vorste-henden Ansprüche, dadurch gekennzeichnet, daß die· bewegliche Einheit (42) einen Elektromotor aufweist, wobei die Windungen (45a) des Motors einen Rotor (45) umgeben, oder teilweise umgeben, welcher die Ausgangswelle aufweist, wobei weiter die Windungen vollständig innerhalb des Gehäuses (43) (dort, wo es vorgesehen ist), der beweglichen Einheit (42) sich befinden.

6. Schwingungserzeuger nach einem der vorstehenden Ansprüche, dadurch gekennzeichnet, daß die ersten (14) und zweiten (19) Wellen des Schwingungserzeugers (10) jeweils miteinander kämmende Stirnräder (22, 23), besztien, wodurch die zweite Welle (19) von der beweglichen Einheit (42) angetrieben wird, durch die erste Welle (14), wobei die Stirnräder (22, 23) dieselbe Anzahl von Zähnen aufweisen.

7. Schwingungserzeuger nach einem der vorstehenden Ansprüche, dadurch gekennzeichnet, daß die ersten und zweiten Massen (17, 21) gleich sind und winkelmäßig an ihren jeweiligen Wellen (14, 19) so angeordnet sind, daß zweifach bei jeder Umdrehung der Wellen (14, 19) der Mittelpunkt der Schwerkraft jeder Masse zugleich in einer Ebene liegt, welche die Drehachse der Wellen (14, 19) enthält, und dann, wenn in dieser Ebene die Mittelpunkte der Schwerkraft der Massen (17, 21) abwechselnd in Stellungen sind, die nahe zusammen und dann am weitesten voneinander entfernt sind.

8. Schwingungserzeugungsmaschine mit einem Grundteil (60), an welchem ein Schwingungserzeugungsteil (61) angebracht ist, über ein nachgiebiges Befestigungselement (63, 65), mit einem linearen Schwingungserzeuger (10) nach einem der Ansprüche 1 bis 7, angebracht an dem schwingungserzeugendem Teil (61), um eine Schwingung dessen zu verursachen.

9. Schwingungserzeugungsmaschine nach Anspruch 8, dadurch gekennzeichnet, daß die nach-giebigen Befestigungen an der Schwingung-serzeugungsmaschine eine Mehrzahl von Verbin-dungen (63) aufweisen, die jeweils drehbar mit dem Grundteil (60) verbunden sind und mit dem schwingungserzeugenden Teil (61), mit einem Federelement (65) zwischen dem Grundteil (60) und der Verbindung (63).

**Revendications**

1. Vibrateur linéaire (10) comprenant un boîtier (11), un premier arbre (14) monté dans le boîtier (11) et susceptible de tourner dans un premier sens autour d'un premier axe de rotation, le premier arbre (14) portant une première masse (17) destinée à tourner autour du premier axe, un second arbre (19) monté dans le boîtier (11), entraîné à partir du premier arbre (14) et susceptible de tourner autour d'un second axe de rotation parallèle au premier axe de rotation, dans un second sens opposé au premier, le second arbre portant une seconde masse (21) destinée à tourner autour du second axe, les première et seconde masses (17, 21) étant, d'une manière générale, de valeur égale et tournant dans des sens opposés mais à la même vitesse, caractérisée en ce que le premier arbre (14) s'étend à partir du boîtier (11) et est relié de manière amovible et alignée avec un arbre de sortie (45) d'un dispositif de mise en mouvement (42) fixé amoviblement au vibrateur (10).

2. Vibrateur selon la revendication 1, caractérisé en ce que le dispositif de mise en mouvement (42) comporte un boîtier extérieur (43) fixé directement au boîtier (11) du vibrateur (10) par des moyens qui permettent de séparer facilement le dispositif de mise en mouvement (42) du vibrateur (10).

3. Vibrateur selon la revendication 2, caractérisé en ce que le boîtier (43) du dispositif de mise en mouvement (42) et/ou le boîtier (11) du vibrateur (10) comportent des moyens de montage permettant de fixer ensemble le vibrateur (10) et le dispositif de mise en mouvement (42) à une machine vibrante.

4. Vibrateur selon l'une quelconque des revendications précédentes, caractérisé en ce que l'arbre de sortie (45) du dispositif de mise en mouvement (42) et le premier arbre (14) du vibrateur (10) sont reliés rigidement l'un à l'autre par une clavette (57) positionée dans des rainures alignées (50) ménagées l'une dans le premier arbre (14) et l'autre dans l'arbre de sortie (45).

5. Vibrateur selon l'une quelconque des revendications précédentes, caractérisé en ce que le dispositif de mise en mouvement (42) comprend un moteur électrique dont les enroulements (45a) entourent complètement ou partiellement un rotor (45) qui comprend l'arbre de sortie, les enroulements (45a) étant entièrement situés à l'intérieur du boîtier (43) (là où il existe) du dispositif de mise en mouvement (42).

6. Vibrateur selon l'une quelconque des revendications précédentes, caractérisé en ce que les premier (14) et second (19) arbres du vibrateur (10) comportent chacun un pignon droit (22, 23), les pignons droits (22, 23) engrenant l'un avec l'autre, de sorte que le second arbre (19) est entraîné à partir du dispositif de mise en mouvement (42) par l'intermédiaire du premier arbre (14), le pignons droits (22, 23) ayant le même nombre de dents.

7. Vibrateur selon l'une quelconque des revendications précédentes, caractérisé en ce que les première et seconde masses (17, 21) sont égales et sont disposées angulairement sur leurs arbres respectifs (14, 19) de telle sorte que, par deux fois dans chaque tour des arbres (14, 19), les centres de gravité des deux masses se trouvent simultanément dans un plan contenant les axes de rotation de arbres (14, 19) et que, quand ils sont dans ce plan, les centres de gravité des masses (17, 21) sont alternativement dans un position mutuellement rapprochée et dans une position d'éloignement mutuel maximal.

8. Machine vibrante comprenant un socle (60) sur lequel une partie vibrante (61) est montée par l'intermédiaire de moyens de montage élastiques (63, 65), un vibrateur linéaire (10) selon l'une quelconques des revendications 1 à 7 étant monté sur la partie vibrante (61) pour faire vibrer celle-ci.

9. Machine vibrante selon la revendication 8, caractérisée en ce que les moyens de montage élastiques de la machine vibrante comprennent plusieurs tringles (63) reliées chacune de manière pivotante au socle (60) et à la partie vibrante (61), des moyens élastiques (65) étant situés entre le socle (60) et les tringles (63).

0 107 100

**0 107 100**

FIG 2

2